# EUROPEAN PATENT APPLICATION

(11) **EP 4 472 014 A1**
(43) Date of publication of application: **04.12.2024**
(21) Application number: 23747347.5
(22) Date of filing: 26.01.2023
(51) Int. Cl.: H02J 7/00, H01M 10/46, H01M 10/48, H01M 50/107, H01M 50/147

(54) **SECONDARY BATTERY CHARGING/DISCHARGING DEVICE**

(30) Priority: 26.01.2022 KR 20220011603
(71) Applicant: LG Energy Solution, Ltd., Seoul 07335 (KR)
(72) Inventor: GU, Ji Suk, Daejeon 34122 (KR)
(74) Representative: Goddar, Heinz J.
(86) International application number: PCT/KR2023/001208
(87) International publication number: WO 2023/146306

(57) **Abstract**

The present invention relates to a secondary battery charging/discharging apparatus. The secondary battery charging/discharging apparatus according to the present invention is for charging and discharging a cylindrical secondary battery and performing a charging and discharging test by applying an electric current to the cylindrical secondary battery. The cylindrical secondary battery includes an electrode assembly, in which a positive electrode, a separator, and a negative electrode are alternately wound, a can configured to accommodate the electrode assembly therein, and a positive electrode terminal positioned on one side of the can. The secondary battery charging/discharging apparatus includes a charging/discharging connection unit configured to come into contact with the positive electrode terminal electrically connected to the positive electrode and the can electrically connected to the negative electrode. The charging/discharging connection unit is positioned in a region on one side of the secondary battery and brought into contact with and electrically connected to the positive electrode terminal and the can which are positioned on the one side of the secondary battery.

## Description

### TECHNICAL FIELD

### CROSS-REFERENCE TO RELATED APPLICATION

The present application claims the benefit of the priority of Korean Patent Application Nos. 10-2022-0011603, filed on January 26, 2022, and 10-2023-0010022, filed on January 26, 2023, which are hereby incorporated by reference in their entirety.

### TECHNICAL FIELD

The present invention relates to a secondary battery charging/discharging apparatus.

### BACKGROUND ART

Secondary batteries may be recharged unlike primary batteries and have been extensively researched and developed in recent years due to small sizes and high capacities thereof. As technology development and demands for mobile devices increase, the demands for secondary batteries as energy sources are rapidly increasing.

Secondary batteries are classified into coin-type batteries, cylindrical batteries, prismatic batteries, and pouch-type batteries, depending on the shapes of battery cases. In such a secondary battery, an electrode assembly installed inside a battery case serves as a chargeable and dischargeable power generating element that has a structure in which electrodes and separators are stacked.

The electrode assemblies may be generally classified into: a jelly-roll-type battery in which a separator is placed between a positive electrode and a negative electrode, each of which has the form of a sheet coated with an active material, and then wound; a stacking-type battery in which stacks, each of which has at least one electrode and at least one separator stacked on each other, are sequentially stacked; and a stacking/folding-type battery in which unit cells are wound together with a long separating film.

After a battery is assembled in a lithium ion battery manufacturing process, a device inspects this actual battery by charging and discharging the same and is referred to as a charging/discharging device.

In a charging/discharging system according to the related art, the system performs a charging/discharging test by arranging charging/discharging pins above and below a battery and bringing these upper and lower pins into contact with the battery to conduct electricity.

As various types of batteries have been developed recently, an insulator is disposed below a battery, making charging/discharging test through upper and lower pins impossible.

Therefore, there is a demand for a new charging/discharging system other than the charging/discharging system using the upper and lower pins.

### DISCLOSURE OF THE INVENTION

### TECHNICAL PROBLEM

One aspect of the present invention is to provide a secondary battery charging/discharging apparatus capable of charging and discharging secondary batteries of various specifications.

### TECHNICAL SOLUTION

A secondary battery charging/discharging apparatus according to an embodiment of the present invention is for charging and discharging a cylindrical secondary battery and performing a charging and discharging test by applying an electric current to the cylindrical secondary battery, wherein the cylindrical secondary battery includes an electrode assembly, in which a positive electrode, a separator, and a negative electrode are alternately wound, a can configured to accommodate the electrode assembly therein, and a positive electrode terminal positioned on one side of the can. The secondary battery charging/discharging apparatus includes a charging/discharging connection unit configured to come into contact with the positive electrode terminal electrically connected to the positive electrode and the can electrically connected to the negative electrode, wherein the charging/discharging connection unit is positioned in a region on one side of the secondary battery and brought into contact with and electrically connected to the positive electrode terminal and the can which are positioned on the one side of the secondary battery.

### ADVANTAGEOUS EFFECTS

According to the present invention, a charging/discharging connection unit is provided to be electrically connected to a secondary battery on one side of the secondary battery, and thus, it is possible to perform a charging/discharging test for secondary batteries of various specifications. Here, a positive electrode pin and a negative electrode pin of the charging/discharging connection unit are connected to the secondary battery on an upper side of the secondary battery, and thus, a secondary battery having an insulator positioned on a lower side thereof may also be charged and discharged.

In addition, the charging/discharging connection unit includes a temperature pin that comes into contact with a can of the secondary battery to measure the temperature, and thus, the temperature of the secondary battery may be easily checked during charging and discharging of the secondary battery.

### BRIEF DESCRIPTION OF THE DRAWINGS

FIG. 1 is a front view showing a secondary battery charging/discharging apparatus according to an embodiment of the present invention.
FIG. 2 is a cross-sectional view showing an example of a secondary battery applied in a secondary battery charging/discharging apparatus according to an embodiment of the present invention.
FIG. 3 is a cross-sectional view showing another example of a secondary battery applied in a secondary battery charging/discharging apparatus according to an embodiment of the present invention.
FIG. 4 is a perspective view showing a charging/discharging connection unit in a secondary battery charging/discharging apparatus according to a first embodiment of the present invention.
FIG. 5 is a front view showing the charging/discharging connection unit in the secondary battery charging/discharging apparatus according to the first embodiment of the present invention.
FIG. 6 is a plan view showing the charging/discharging connection unit in the secondary battery charging/discharging apparatus according to the first embodiment of the present invention.
FIG. 7 is a perspective view showing a charging/discharging connection unit in a secondary battery charging/discharging apparatus according to a second embodiment of the present invention.
FIG. 8 is a front view showing the charging/discharging connection unit in the secondary battery charging/discharging apparatus according to the second embodiment of the present invention.
FIG. 9 is a plan view showing the charging/discharging connection unit in the secondary battery charging/discharging apparatus according to the second embodiment of the present invention.
FIG. 10 is a perspective view showing a charging/discharging connection unit in a secondary battery charging/discharging apparatus according to a third embodiment of the present invention.

### MODE FOR CARRYING OUT THE INVENTION

The objects, specific advantages, and novel features of the present invention will be more clearly understood from the following detailed description and preferred embodiments taken in conjunction with the accompanying drawings. In the specification, when reference numerals are given to elements in each drawing, it should be noted that the same elements will be designated by the same reference numerals if possible although they are shown in different drawings. Also, the present invention may be embodied in various different forms, and is not limited to the embodiments described herein. In addition, in describing the present invention, detailed descriptions related to well-known functions are omitted so as not to unnecessarily obscure subject matters of the present invention.

### Secondary battery charging/discharging apparatus according to a first embodiment

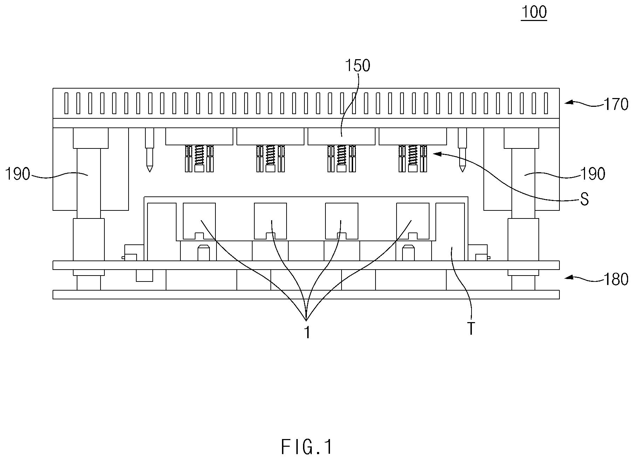

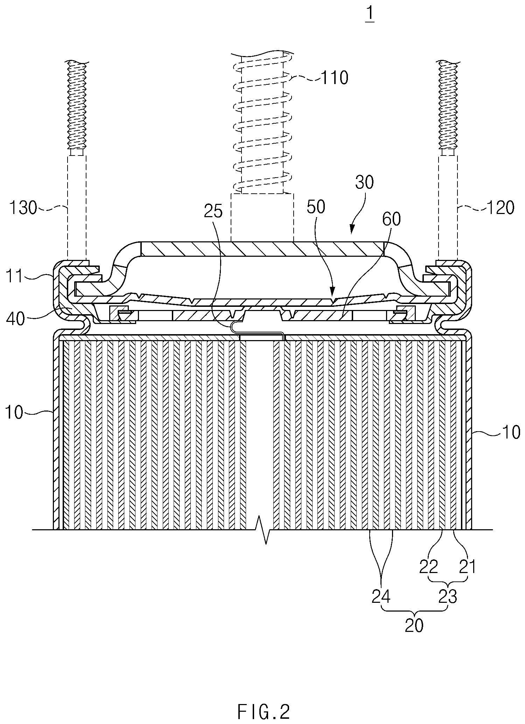

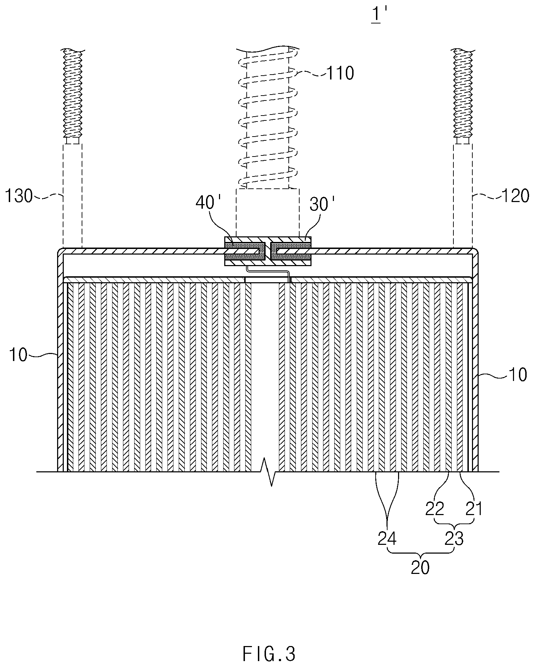

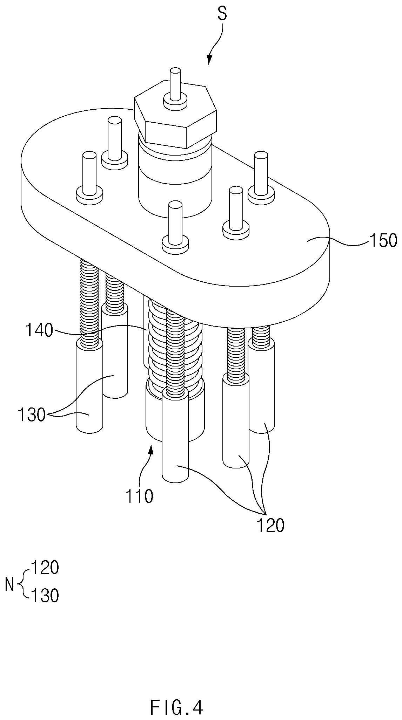

FIG. 1 is a front view showing a secondary battery charging/discharging apparatus according to an embodiment of the present invention, FIG. 2 is a cross-sectional view showing an example of a secondary battery applied in a secondary battery charging/discharging apparatus according to an embodiment of the present invention, FIG. 3 is a cross-sectional view showing another example of a secondary battery applied in a secondary battery charging/discharging apparatus according to an embodiment of the present invention, and FIG. 4 is a perspective view showing a charging/discharging connection unit in a secondary battery charging/discharging apparatus according to a first embodiment of the present invention.

Referring to FIGS. 1 to 3, a secondary battery charging/discharging apparatus 100 according to a first embodiment of the present invention is for charging and discharging cylindrical secondary batteries 1 and 1' and performing a charging and discharging test by applying an electric current to the cylindrical secondary batteries that include electrode assemblies 20, cans 10 for accommodating the electrode assemblies 20 therein, and positive electrode terminals 30 and 30' positioned on one side of the cans 10. This secondary battery charging/discharging apparatus includes a charging/discharging connection unit S that comes into contact with the positive electrode terminals 30 and 30' electrically connected to positive electrodes 21 and the cans 10 electrically connected to negative electrodes 22.

Also, the secondary battery charging/discharging apparatus 100 according to the first embodiment of the present invention may further include an upper die 170, a lower die 180, and a guide unit 190.

More specifically, each of the electrode assemblies 20 in the secondary batteries 1 and 1' applied in the secondary battery charging/discharging apparatus 100 according to the first embodiment of the present invention serves as a power generating element capable of charging and discharging and may be configured by alternately stacking electrodes 23 and separators 24. Here, the electrodes 23 include a positive electrode 21 and a negative electrode 22, and the electrode assembly 20 may have a cylindrical shape in which positive electrodes 21, separators 24, and negative electrodes 22 are alternately wound. Here, each of the separators 24 separates and electrically insulate the positive electrode 21 and the negative electrode 22 from each other.

The positive electrode 21 may include a positive electrode collector and a positive electrode active material stacked on the positive electrode collector.

The positive electrode collector may include a foil made of an aluminum material.

The positive electrode active material may include lithium manganese oxide, lithium cobalt oxide, lithium nickel oxide, lithium iron phosphate, or a compound or mixture including one or more thereof.

The negative electrode 22 may include a negative electrode collector and a negative electrode active material stacked on the negative electrode collector.

The negative electrode collector may include a foil made of, for example, a copper (Cu) material.

The negative electrode active material may include a compound or mixture including a graphite-based material.

The separator 24 includes an insulating material and electrically insulates the positive electrode 21 and the negative electrode 22 from each other. Here, the separator 24 may include a polyolefin-based resin membrane, such as polyethylene and polypropylene, having microporous properties.

Also, the electrode assembly 20 may further include a positive electrode tab 25 provided at an end of the positive electrode 21 and a negative electrode tab provided at an end of the negative electrode 22. Here, positive electrode tabs 25 may be electrically connected to the positive electrode terminals 30 and 30', respectively, and negative electrode tabs may be electrically connected to the cans 10, respectively.

The can 10 has an accommodation portion open on one side and may accommodate the electrode assembly 20. Here, the can 10 may be formed in a tubular shape in which the top is open and the bottom has a bottom surface. Here, the can may be formed in, for example, a cylindrical shape to constitute cylindrical secondary batteries 1 and 1'. Also, the can 10 may include a metal material.

The positive electrode terminals 30 and 30' may be positioned on one side of the cans 10. Here, for example, the positive electrode terminals 30 and 30' may be positioned on the uppermost sides of the cans 10.

The positive electrode terminals 30 and 30' may be positioned at the centers of the upper portions of the secondary batteries 1 and 1' in a plan view, and upper surfaces 11 of the cans 10 may be positioned on the outside of the upper portions of the secondary batteries 1 and 1'. Here, gaskets 40 and 40' made of an insulating material may be provided between the positive electrode terminals 30 and 30' and the cans 10.

Also, in the secondary battery 1, for example, a cap assembly may be formed which includes a positive electrode terminal 30 provided in the form of a top cap and a safety vent 50 and a safety element 60 provided below the positive electrode terminal 30. Here, regarding the positive electrode terminals 30 and 30', the positive electrode terminal 30 may be electrically connected to the positive electrode 21 through the safety vent 50 and the safety element 60 via the positive electrode tab 25. Here, the upper portion of the can 10 surrounds the edge of the positive electrode terminal 30 having a top cap shape, and the positive electrode terminal 30 and the can 10 may be insulated from each other. Here, gaskets 40 made of an insulating material may be provided between the positive electrode terminals 30 and 30' and the cans 10.

Also, in the secondary battery 1' as another example, a positive electrode tab connected to the positive electrode 21 may be directly connected to the positive electrode terminal 30'. Here, the positive electrode terminal 30' may be provided in the form of, for example, a rivet. Here, a gasket 40' insulating the positive electrode terminal 30' and the can 10 may be provided.

Referring to FIG. 1, the upper die 170 may be positioned above the secondary batteries 1 and 1', and the charging/discharging connection unit S may be installed thereto.

The lower die 180 may be positioned below the secondary batteries 1 and 1'.

The lower die 180 moves toward the upper die 170, and the positive electrode terminals 30 and 30' and the upper portions of the cans 10 of the secondary batteries 1 and 1' may be brought into contact with a positive electrode pin 110 and a negative electrode pin N, respectively. Here, the lower die 180 may be moved in the up-down direction by a movement means. The movement means may include, for example, a pneumatic or hydraulic pressure actuator.

Here, the secondary batteries 1 and 1' may be seated on the lower die 180 while being accommodated in a tray T having an open top. Accordingly, the lower die 180 moves the tray, in which the secondary batteries 1 and 1' are accommodated, to the upper die 170, and thus, the upper portions of the secondary batteries 1 and 1' may be connected to the charging/discharging connection unit S.

A guide unit 190 is connected to the upper die 170 and the lower die 180 and may guide the movement of the lower die 180. The guide unit 190 may be formed in a circular rod shape.

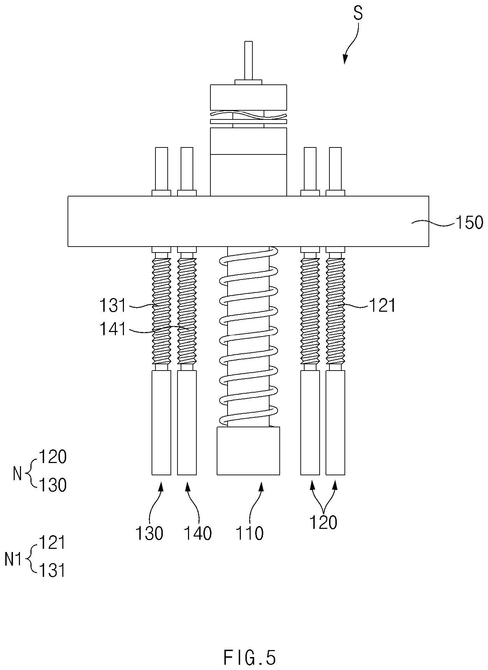

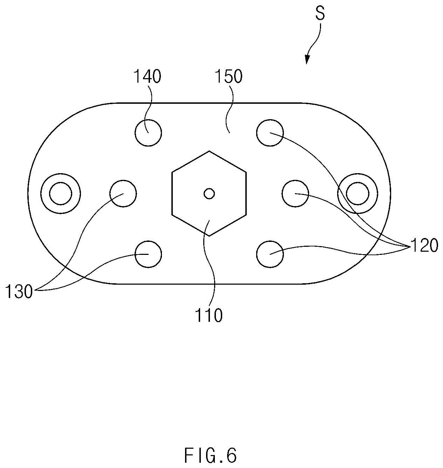

FIG. 5 is a front view showing the charging/discharging connection unit in the secondary battery charging/discharging apparatus according to the first embodiment of the present invention, and FIG. 6 is a plan view showing the charging/discharging connection unit in the secondary battery charging/discharging apparatus according to the first embodiment of the present invention.

Referring to FIGS. 4 to 6, the charging/discharging connection unit S may be positioned in regions on one side of the secondary batteries 1 and 1' and brought into contact with and electrically connected to the positive electrode terminals 30 and 30' and the cans 10 which are positioned on the one side of the secondary batteries 1 and 1'. Here, the charging/discharging connection unit S may be positioned above the secondary batteries 1 and 1'.

Also, the charging/discharging connection unit S may include a positive electrode pin 110, which comes into contact with the positive electrode terminals 30 and 30', and a negative electrode pin N, which comes into contact with the cans 10. In addition, the charging/discharging connection unit S may further include a support block 150 and a temperature pin 140.

An end of the positive electrode pin 110 may come into contact with upper surfaces 11 of the positive electrode terminals 30 and 30', and an end of the negative electrode pin N may come into contact with upper portions of the cans 10.

The positive electrode pin 110 may be positioned at the center in a plan view, and the negative electrode pin N may be positioned around the positive electrode pin 110 in a plan view and spaced a certain distance from the positive electrode pin 110.

The negative electrode pin N may be provided in plurality, and the plurality of negative electrode pins may include a negative electrode current pin 120 and a negative electrode voltage pin 130.

Here, the number of each of the negative electrode current pin 120 and the negative electrode voltage pin 130 in the negative electrode pin N of the charging/discharging connection unit S may be one or more. Here, for example, the negative electrode pin N of the charging/discharging connection unit S may be provided with three negative electrode current pins 120 and two negative electrode voltage pins 130.

Therefore, the negative electrode pin N includes the negative electrode current pins 120 and the negative electrode voltage pins 130, and thus, the size thereof may be reduced compared to when the current pin and the voltage pin are integrated as a single body. That is, the negative electrode pin N is provided with a plurality of negative electrode current pins 120 and negative electrode voltage pins 130, and thus, resistance of electricity flowing through each negative electrode voltage pin N is reduced. Accordingly, the negative electrode pin N may be formed thinner. Accordingly, it is possible to prevent a short circuit caused by contact between the negative electrode pin N and the positive electrode terminals 30 and 30'.

The temperature pin 140 may come into contact with the upper portion of the can 10 and measure the temperature of the contact surface.

The temperature pin 140 may be positioned around the positive electrode pin 110 in a plan view and spaced a certain distance from the positive electrode pin 110.

The support block 150 may support the positive electrode pin 110, the negative electrode pin N, and the temperature pin 140.

Also, the support block 150 may be installed to a lower portion of the upper die 170. Here, the positive electrode pin 110, the negative electrode pin N, and the temperature pin 140 may protrude downward from the support block 150.

Meanwhile, a positive electrode pin-elastic part 111, a negative electrode pin-elastic part N1, and a temperature pin-elastic part 141 may be further provided in some portions of the positive electrode pin 110, the negative electrode pin N, and the temperature pin 140, respectively, which protrude downward from the support block 150. Accordingly, when the positive electrode pin 110, the negative electrode pin N, and the temperature pin 140 come into contact with the upper portions of the secondary batteries 1 and 1', impact may be absorbed by the positive electrode pin-elastic part 111, the negative electrode pin-elastic part N1, and the temperature pin-elastic part 141. Also, when deviations occur in the distances from the upper portions of the secondary batteries 1 and 1' to the positive electrode pin 110, the negative electrode pin N, and the temperature pin 140, these deviations may be eliminated by the positive electrode pin-elastic part 111, the negative electrode pin-elastic part N1, and the temperature pin-elastic part 141.

The positive electrode pin-elastic part 111, the negative electrode pin-elastic part N1, and the temperature pin-elastic part 141 may be positioned between the support block 150 and ends of the positive electrode pin-elastic part 111, the negative electrode pin-elastic part N1, and the temperature pin-elastic part 141, respectively.

The positive electrode pin-elastic part 111, the negative electrode pin-elastic part N1, and the temperature pin-elastic part 141 may be provided in the form of, for example, a coil spring.

Meanwhile, the negative electrode pin-elastic part N1 may include a negative electrode current pin-elastic part 121 provided in the negative electrode current pin 120 and a negative electrode voltage pin-elastic part 131 provided in the negative electrode voltage pin 130.

Referring to FIGS. 1 to 4, in the secondary battery charging/discharging apparatus 100 having the above configuration according to the first embodiment of the present invention, the charging/discharging connection unit S is provided to be electrically connected to the secondary batteries 1 and 1' on upper sides of the secondary batteries 1 and 1'. Accordingly, it is possible to charge and discharge secondary batteries 1 and 1' of various specifications and perform charging/discharging tests therefor. Here, the positive electrode pin 110 and the negative electrode pin N of the charging/discharging connection unit S are connected to the secondary batteries 1 and 1' on upper sides thereof, and thus, the secondary batteries 1 and 1' having an insulator positioned on lower sides thereof may also be charged and discharged.

In addition, the charging/discharging connection unit S includes the temperature pin 15 that comes into contact with the cans 10 of the secondary batteries 1 and 1' to measure the temperature, and thus, the temperatures of the secondary batteries 1 and 1' may be easily checked during charging and discharging of the secondary batteries 1 and 1'.

### Secondary battery charging/discharging apparatus according to a second embodiment

A secondary battery charging/discharging apparatus according to a second embodiment of the present invention is descried below.

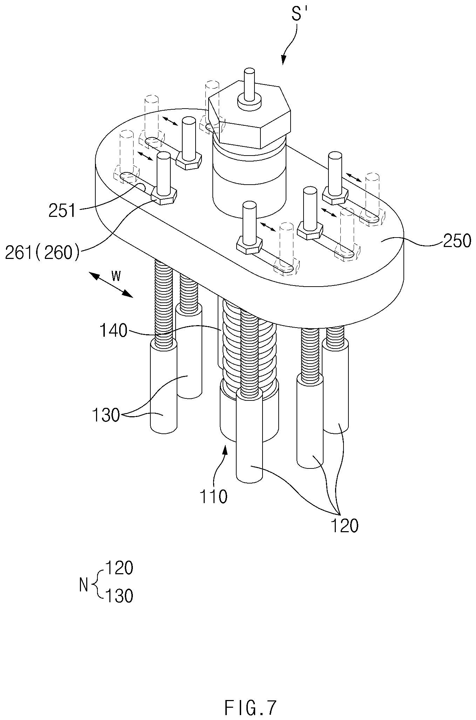

FIG. 7 is a perspective view showing a charging/discharging connection unit in the secondary battery charging/discharging apparatus according to the second embodiment of the present invention.

Referring to FIGS. 2, 3, and 7, the secondary battery charging/discharging apparatus according to the second embodiment of the present invention is for charging and discharging cylindrical secondary batteries 1 and 1' and performing a charging and discharging test by applying an electric current to the cylindrical secondary batteries that include electrode assemblies 20, cans 10 for accommodating the electrode assemblies 20 therein, and positive electrode terminals 30 and 30' positioned on one side of the cans 10. This secondary battery charging/discharging apparatus includes a charging/discharging connection unit S' that comes into contact with the positive electrode terminals 30 and 30' electrically connected to positive electrodes 21 and the cans 10 electrically connected to negative electrodes 22. Also, like the first embodiment described above, the secondary battery charging/discharging apparatus according to the second embodiment of the present invention may further include an upper die 170, a lower die 180, and a guide unit 190 (see FIG. 1) .

The secondary battery charging/discharging apparatus according to the second embodiment of the present invention is different from the secondary battery charging/discharging apparatus according to the first embodiment described above in that configurations for adjusting the positions of a negative electrode pin N and a temperature pin 140 are further provided in the charging/discharging connection unit S'. Thus, this embodiment is described with a focus on differences from the above embodiment, and repeated descriptions are omitted or briefly described.

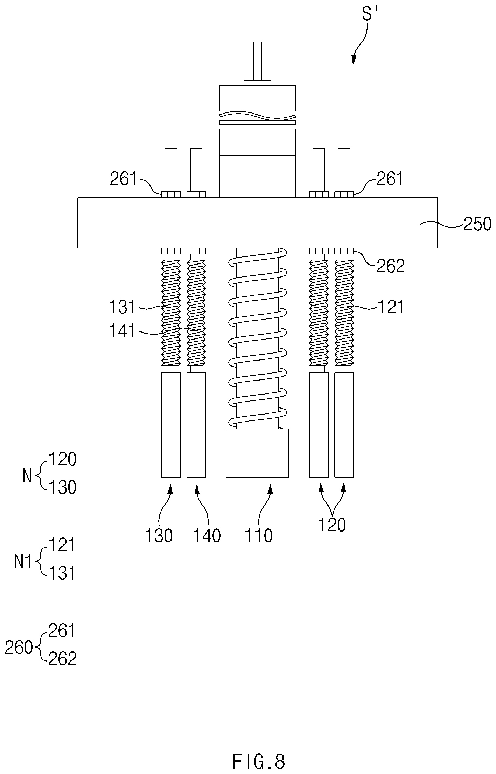

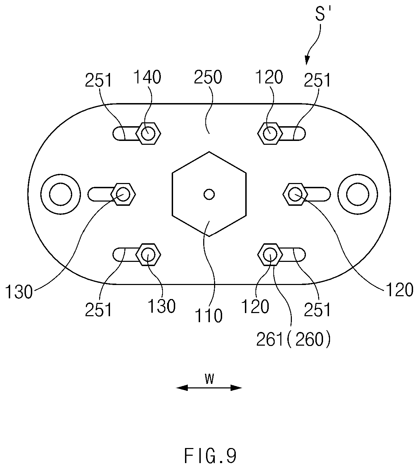

FIG. 8 is a front view showing the charging/discharging connection unit in the secondary battery charging/discharging apparatus according to the second embodiment of the present invention, and FIG. 9 is a plan view showing the charging/discharging connection unit in the secondary battery charging/discharging apparatus according to the second embodiment of the present invention.

More specifically, referring to FIGS. 2, 3, and 7 to 9, the charging/discharging connection unit S' may be positioned in regions on one side of the secondary batteries 1 and 1' and brought into contact with and electrically connected to the positive electrode terminals 30 and 30' and the cans 10 which are positioned on the one side of the secondary batteries 1 and 1'. Here, the charging/discharging connection unit S' may be positioned above the secondary batteries 1 and 1'.

Also, the charging/discharging connection unit S' may include a positive electrode pin 110, which comes into contact with the positive electrode terminals 30 and 30', and a negative electrode pin N, which comes into contact with the cans 10. In addition, the charging/discharging connection unit S' may further include a support block 250 and a temperature pin 140.

An end of the positive electrode pin 110 may come into contact with upper surfaces 11 of the positive electrode terminals 30 and 30', and an end of the negative electrode pin N may come into contact with upper portions of the cans 10.

The positive electrode pin 110 may be positioned at the center in a plan view, and the negative electrode pin N may be positioned around the positive electrode pin 110 in a plan view and spaced a certain distance from the positive electrode pin 110.

The negative electrode pin N may be provided in plurality, and the plurality of negative electrode pins may include a negative electrode current pin 120 and a negative electrode voltage pin 130.

Here, the number of each of the negative electrode current pin 120 and the negative electrode voltage pin 130 in the negative electrode pin N of the charging/discharging connection unit S' may be one or more. Here, for example, the negative electrode pin N of the charging/discharging connection unit S' may be provided with three negative electrode current pins 120 and two negative electrode voltage pins 130.

The temperature pin 140 may come into contact with the upper portion of the can 10 and measure the temperature of the contact surface.

The temperature pin 140 may be positioned around the positive electrode pin 110 in a plan view and spaced a certain distance from the positive electrode pin 110.

The support block 250 may support the positive electrode pin 110, the negative electrode pin N, and the temperature pin 140.

The support block 250 may further include a position adjustment hole 251 which extends in a width direction W of the support block 250.

Here, the negative electrode pin N and the temperature pin 140 may pass through the position adjustment hole 251, be installed to the support block 250, and move along the position adjustment hole 251 in the width direction W of the support block 250 to thereby adjust positions thereof. Accordingly, it is possible to adjust the distance between the positive electrode pin 110 and each of the negative electrode pin N and the temperature pin 140, and thus, secondary batteries having various widths may be easily charged and discharged.

Meanwhile, in the secondary battery charging/discharging apparatus according to the second embodiment of the present invention, the charging/discharging connection unit S' may further include a fixing means 260 that fixes the positions of the negative electrode pin N and the temperature pin 140 to the support block.

The fixing means 260 may include, for example, a plurality of nuts 261 and 262.

The plurality of nuts 261 and 262 may be coupled to each of the negative electrode pin N and the temperature pin 140. Here, the negative electrode pin N and the temperature pin 140 have threads formed along the outer circumferential surfaces thereof and may be screw-coupled to the plurality of nuts 261 and 262 having thread grooves formed on the inner circumferential surfaces.

Also, the plurality of nuts 261 and 262 may include a first nut 261 positioned on an upper surface of the support block 250 and a second nut 262 positioned on a lower surface of the support block 250. That is, the first nut 261 and the second nut 262 are coupled to each of the negative electrode pin N and the temperature pin 140, and thus, the positions of the negative electrode pin N and the temperature pin 140 may be fixed to the support block 250.

Meanwhile, a positive electrode pin-elastic part 111, a negative electrode pin-elastic part N1, and a temperature pin-elastic part 141 may be further provided in some portions of the positive electrode pin 110, the negative electrode pin N, and the temperature pin 140, respectively, which protrude downward from the support block 250. Accordingly, when the positive electrode pin 110, the negative electrode pin N, and the temperature pin 140 come into contact with the upper portions of the secondary batteries 1 and 1', impact may be absorbed by the positive electrode pin-elastic part 111, the negative electrode pin-elastic part N1, and the temperature pin-elastic part 141. Also, when deviations occur in the distances from the upper portions of the secondary batteries 1 and 1' to the positive electrode pin 110, the negative electrode pin N, and the temperature pin 140, these deviations may be eliminated by the positive electrode pin-elastic part 111, the negative electrode pin-elastic part N1, and the temperature pin-elastic part 141.

The positive electrode pin-elastic part 111, the negative electrode pin-elastic part N1, and the temperature pin-elastic part 141 may be positioned between the support block 250 and ends of the positive electrode pin-elastic part 111, the negative electrode pin-elastic part N1, and the temperature pin-elastic part 141, respectively.

The positive electrode pin-elastic part 111, the negative electrode pin-elastic part N1, and the temperature pin-elastic part 141 may be provided in the form of, for example, a coil spring.

Meanwhile, the negative electrode pin-elastic part N1 may include a negative electrode current pin-elastic part 121 provided in the negative electrode current pin 120 and a negative electrode voltage pin-elastic part 131 provided in the negative electrode voltage pin 130.

### Secondary battery charging/discharging apparatus according to a third embodiment

A secondary battery charging/discharging apparatus according to a third embodiment of the present invention is descried below.

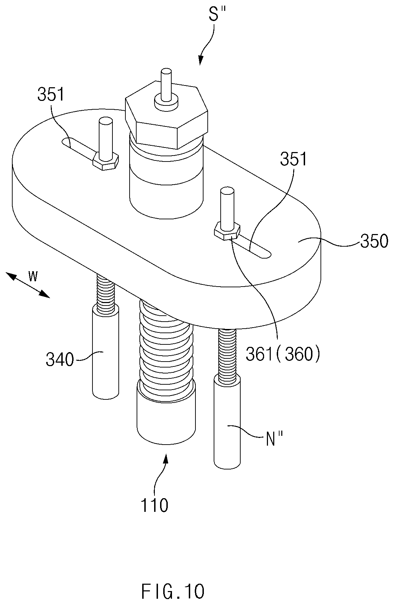

FIG. 10 is a perspective view showing a charging/discharging connection unit in a secondary battery charging/discharging apparatus according to a third embodiment of the present invention.

Referring to FIGS. 2, 3, and 10, the secondary battery charging/discharging apparatus according to the third embodiment of the present invention is for charging and discharging cylindrical secondary batteries 1 and 1' and performing a charging and discharging test by applying an electric current to the cylindrical secondary batteries that include electrode assemblies 20, cans 10 for accommodating the electrode assemblies 20 therein, and positive electrode terminals 30 and 30' positioned on one side of the cans 10. This secondary battery charging/discharging apparatus includes a charging/discharging connection unit S" that comes into contact with the positive electrode terminals 30 and 30' electrically connected to positive electrodes 21 and the cans 10 electrically connected to negative electrodes 22. Also, like the first embodiment and the second embodiment described above, the secondary battery charging/discharging apparatus according to the third embodiment of the present invention may further include an upper die, a lower die, and a guide unit.

The secondary battery charging/discharging apparatus according to the third embodiment of the present invention is different from the secondary battery charging/discharging apparatuses according to the first embodiment and the second embodiment described above in that the number of a negative electrode pin N" and a temperature pin 340 provided in the charging/discharging connection unit S" is one. Thus, this embodiment is described with a focus on differences from the above embodiments, and repeated descriptions are omitted or briefly described.

More specifically, referring to FIGS. 2 and 10, the charging/discharging connection unit S" may be positioned in regions on one side of the secondary batteries 1 and 1' and brought into contact with and electrically connected to the positive electrode terminals 30 and 30' and the cans 10 which are positioned on the one side of the secondary batteries 1 and 1'. Here, the charging/discharging connection unit S" may be positioned above the secondary batteries 1 and 1'.

Also, the charging/discharging connection unit S" may include a positive electrode pin 110, which comes into contact with the positive electrode terminals 30 and 30', and a negative electrode pin N", which comes into contact with the cans 10. In addition, the charging/discharging connection unit S" may further include a support block 350 and a temperature pin 140.

An end of the positive electrode pin 110 may come into contact with upper surfaces 11 of the positive electrode terminals 30 and 30', and an end of the negative electrode pin N" may come into contact with upper portions of the cans 10.

The positive electrode pin 110 may be positioned at the center in a plan view, and the negative electrode pin N" may be spaced a certain distance from the positive electrode pin 110 in a plan view.

The number of negative electrode pin N" is one, and current and voltage may flow therethrough. One negative electrode pin N" is provided, and occupies less space than when provided in plurality, and thus, space utilization may be improved. The temperature pin 140 may come into contact with the upper portion of the can 10 and measure the temperature of the contact surface.

Also, the temperature pin 140 may be spaced a certain distance from the positive electrode pin 110 in a plan view.

The support block 350 may support the positive electrode pin 110, the negative electrode pin N", and the temperature pin 140.

Also, the support block 350 may further include a position adjustment hole 351 which extends in a width direction W of the support block 350.

Here, the negative electrode pin N" and the temperature pin 340 may pass through the position adjustment hole 351, be installed to the support block 350, and move along the position adjustment hole 351 in the width direction W of the support block 350 to thereby adjust positions thereof. Accordingly, it is possible to adjust the distance between the positive electrode pin 110 and each of the negative electrode pin N" and the temperature pin 340, and thus, secondary batteries having various widths may be easily charged and discharged.

Meanwhile, in the secondary battery charging/discharging apparatus according to the third embodiment of the present invention, the charging/discharging connection unit S" may further include a fixing means 360 that fixes the positions of the negative electrode pin N" and the temperature pin 340 to the support block.

The fixing means 360 may include, for example, a plurality of nuts 361.

The plurality of nuts 361 may be coupled to each of the negative electrode pin N" and the temperature pin 340. Here, the negative electrode pin and the temperature pin have threads formed along the outer circumferential surfaces thereof and may be screw-coupled to the plurality of nuts 361 having thread grooves formed on the inner circumferential surfaces.

Meanwhile, a positive electrode pin-elastic part, a negative electrode pin-elastic part, a temperature pin-elastic part may be further provided in some portions of the positive electrode pin 110, the negative electrode pin N", and the temperature pin 140, respectively, which protrude downward from the support block 350.

Although the present invention has been described in detail through the specific embodiments, these are intended to specifically describe the present invention, and the present invention is not limited thereto. Various modifications can be made within the technical idea of the present invention by those skilled in the art.

Also, the specific protection scope of the invention will become apparent from the appended claims.

### [Description of the Symbols]

1, 1': Secondary battery
10: Can
11: Upper surface
20: Electrode assembly
21: Positive electrode
22: Negative electrode
23: Electrode
24: Separator
25: Positive electrode tab
30, 30': Positive electrode terminal
40, 40': Gasket
50: Safety vent
60: Safety element
100: Secondary battery charging/discharging apparatus
110: Positive electrode pin
111: Positive electrode pin-elastic part
120: Negative electrode current pin
121: Negative electrode current pin-elastic part
130: Negative electrode voltage pin
131: Negative electrode voltage pin-elastic part
140, 340: Temperature pin
141: Temperature pin-elastic part
150, 250, 350: Support block
251, 351: Position adjustment hole
260, 360: Fixing means
261, 361: First nut
262: Second nut
170: Upper die
180: Lower die
190: Guide unit
S, S', S": Charging/discharging connection unit
T: Tray
N, N": Negative electrode pin
N1: Negative electrode pin-elastic part
W: Width direction

## Claims

1. A secondary battery charging/discharging apparatus for charging and discharging a cylindrical secondary battery and performing a charging and discharging test by applying an electric current to the cylindrical secondary battery, wherein the cylindrical secondary battery comprises an electrode assembly, in which a positive electrode, a separator, and a negative electrode are alternately wound, a can configured to accommodate the electrode assembly therein, and a positive electrode terminal positioned on one side of the can,
the secondary battery charging/discharging apparatus comprising a charging/discharging connection unit configured to come into contact with the positive electrode terminal electrically connected to the positive electrode and the can electrically connected to the negative electrode,
wherein the charging/discharging connection unit is positioned in a region on one side of the secondary battery and brought into contact with and electrically connected to the positive electrode terminal and the can which are positioned on the one side of the secondary battery.

2. The secondary battery charging/discharging apparatus of claim 1, wherein the charging/discharging connection unit comprises:
a positive electrode pin configured to come into contact with the positive electrode terminal; and
a negative electrode pin configured to come into contact with the can.

3. The secondary battery charging/discharging apparatus of claim 2, wherein the charging/discharging connection unit is positioned above the secondary battery,
the positive electrode terminal is positioned on the uppermost side of the can,
an end of the positive electrode pin comes into contact with an upper surface of the positive electrode terminal, and
an end of the negative electrode pin comes into contact with an upper portion of the can.

4. The secondary battery charging/discharging apparatus of claim 1, wherein the positive electrode pin is positioned at the center in a plan view, and
the negative electrode pin is positioned around the positive electrode pin in a plan view and spaced a certain distance from the positive electrode pin.

5. The secondary battery charging/discharging apparatus of claim 4, wherein the charging/discharging connection unit further comprises a temperature pin that comes into contact with an upper portion of the can and measures the temperature of the contact surface.

6. The secondary battery charging/discharging apparatus of claim 5, wherein the temperature pin is positioned around the positive electrode pin in a plan view and spaced a certain distance from the positive electrode pin.

7. The secondary battery charging/discharging apparatus of claim 5, wherein the charging/discharging connection unit further comprises a support block that supports the positive electrode pin, the negative electrode pin, and the temperature pin.

8. The secondary battery charging/discharging apparatus of claim 7, further comprising an upper die, which is positioned above the secondary battery and to which the charging/discharging connection unit is installed, and a lower die, which is positioned below the secondary battery,
wherein the lower die moves toward the upper die, and the positive electrode terminal and the upper portion of the can of the secondary battery are brought into contact with the positive electrode pin and the negative electrode pin, respectively.

9. The secondary battery charging/discharging apparatus of claim 8, wherein the support block is installed to a lower portion of the upper die, and
the positive electrode pin, the negative electrode pin, and the temperature pin protrude downward from the support block.

10. The secondary battery charging/discharging apparatus of claim 9, further comprising a positive electrode pin-elastic part, a negative electrode pin-elastic part, and a temperature pin-elastic part which are provided in some portions of the positive electrode pin, the negative electrode pin, and the temperature pin, respectively, which protrude downward from the support block.

11. The secondary battery charging/discharging apparatus of claim 10, wherein the positive electrode pin-elastic part, the negative electrode pin-elastic part, and the temperature pin-elastic part are positioned between the support block and ends of the positive electrode pin-elastic part, the negative electrode pin-elastic part, and the temperature pin-elastic part, respectively.

12. The secondary battery charging/discharging apparatus of claim 4, wherein the negative electrode pin is provided in plurality, and the plurality of negative electrode pins comprise a negative electrode current pin and a negative electrode voltage pin.

13. The secondary battery charging/discharging apparatus of any one of claims 1 to 12, wherein the positive electrode terminal and the can are insulated from each other, and
the positive electrode terminal is positioned at the center of the upper portion of the secondary battery in a plan view, and the upper surface of the can is positioned on the outside of the upper portion of the secondary battery.

14. The secondary battery charging/discharging apparatus of claim 7, wherein the support block further comprises a position adjustment hole which extends in a width direction (W) of the support block, and
the negative electrode pin and the temperature pin pass through the position adjustment hole, are installed to the support block, and move along the position adjustment hole in the width direction (W) of the support block to thereby adjust positions thereof.

15. The secondary battery charging/discharging apparatus of claim 14, wherein the charging/discharging connection unit further comprises a fixing means that fixes the positions of the negative electrode pin and the temperature pin to the support block.

16. The secondary battery charging/discharging apparatus of claim 15, wherein the fixing means comprises a plurality of nuts,
the plurality of nuts are coupled to the negative electrode pin and the temperature pin, and
the plurality of nuts comprise a first nut positioned on an upper surface of the support block and a second nut positioned on a lower surface of the support block.

17. The secondary battery charging/discharging apparatus of claim 5, wherein the number of each of the positive electrode pin, the negative electrode pin, and the temperature pin is one.
